Europäisches Patentamt

European Patent Office

Office européen des brevets

(11) Veröffentlichungsnummer: **0 180 796**
**A2**

(12) **EUROPÄISCHE PATENTANMELDUNG**

(21) Anmeldenummer: 85112778.7

(51) Int. Cl.⁴: **B 01 D 9/00**

(22) Anmeldetag: 09.10.85

(30) Priorität: 05.11.84 DE 3440294

(43) Veröffentlichungstag der Anmeldung:
14.05.86 Patentblatt 86/20

(84) Benannte Vertragsstaaten:
AT BE CH DE FR GB IT LI LU NL SE

(71) Anmelder: Hugo Petersen Ges. für verfahrenstechn.
Anlagenbau mbH & Co KG
Postfach 4640
D-6200 Wiesbaden 1(DE)

(72) Erfinder: Seipenbusch, Jürgen, Dipl.-Ing.
Mendelssohn-Bartholdy-Strasse 12
D-6200 Wiesbaden(DE)

(54) Verfahren zur Kühlkristallisation.

(57) Die Erfindung betrifft ein Verfahren zur Kristallisation von Verbindungen aus ihren entsprechenden Lösungen durch Kühlung, wobei der zu kristallisierenden Lösung eine mit dem Lösungmittel nicht mischbare Flüssigkeit zugegeben wird, die im gewünschten Temperaturbereich der Kristallisation verdampft.

FIG.: 1

2.11.1984
P-EP 85/27

Hugo Petersen, Gesellschaft für verfahrenstechnischen
Anlagenbau mbH & Co. KG, Dantestr. 4-6, D-6200 Wiesbaden 1

## Verfahren zur Kühlkristallisation

Die vorliegende Erfindung betrifft Verfahren zur
Kristallisation von in Lösung vorliegenden Verbindungen
durch Kühlung, indem man der Lösung eine mit dem
Lösungsmittel nicht mischbare Flüssigkeit zugibt,
deren Siedepunkt bei Systemdruck bei der notwendigen
Kristallisationstemperatur liegt, wobei die nicht
mischbare Flüssigkeit so gewählt wird, daß der Systemdruck im Bereich des Umgebungsdruckes oder höher
liegt.

Prinzipiell sind drei Verfahren zum Auskristallisieren einer bestimmten Komponente aus der entsprechenden Lösung bekannt:

1. Kristallisation durch indirekte Kühlung, wobei die Verbindung bevorzugt an den Kühlflächen auskristallisiert und von dort mechanisch entfernt werden muß.

2. Kristallisation durch Verdampfen eines Teils des Lösungsmittels z.B. durch Anlegen von Unterdruck.

3. Kristallisation durch direkte Kühlung mittels eines Gases, wie z.B. Luft, wobei das Gas mit der Lösung in Kontakt gebracht wird und diese dabei abkühlt, indem es sich selbst erwärmt. Dieser Effekt kann verstärkt werden, wenn das Gas einen Teil des Lösungsmittels mit sich führt und dadurch der Lösung Verdampfungswärme entzieht.

Für das unter 1 beschriebene Verfahren benötigt man komplizierte Apparaturen; ausserdem kommt noch hinzu, daß nur kleine Mengendurchsätze möglich sind.

Bei den unter 2 und 3 beschriebenen Verfahrensweisen kristallisiert die Verbindung direkt aus ihrer Lösung aus, so daß eine mechanische Reinigung der Kühlflächen nicht erforderlich ist.

Die unter 2 beschriebene Methode verbietet sich aber für eine Kristallisation, bei der zur Entfernung des Lösungsmittels wegen dessen hohen Siedepunkts extrem niedrige Drucke erforderlich sind. Auch führt dies dazu, daß komplizierte Vakuumapparaturen bereitgestellt werden müssen.

Da bei dem unter 3 beschriebenen Verfahren ein Gas als Kühlmedium verwendet wird, benötigt man wegen der geringen Wärmekapazität von Gasen sehr große Gasmengen, um die notwendige Kühlung der zu kristallisierenden Lösung zu bewerkstelligen. Zu diesem Nachteil kommt noch hinzu, daß gegebenenfalls der Gasstrom noch zusätzlich von unerwünschten Komponenten, wie mitgeführtem Lösungsmittel anschliessend noch befreit werden muß.

Aufgabe der Erfindung ist daher ein Verfahren zur Kühlkristallisation, daß apparativ und verfahrenstechnisch weniger aufwendig ist als die vorstehend beschriebenen bekannten Verfahren.

Die Aufgabe wird erfindungsgemäß dadurch gelöst, daß der die zu kristallisiernde Komponente enthaltenen Flüssigkeit eine mit dieser nicht mischbare Flüssigkeit zugegeben wird, die im gewünschten Temperaturbereich der Kristallisation verdampft. Die der zu kristallisierenden Lösung zugesetzte, mit dem Lösungsmittel nicht mischbare Flüssigkeit weist vorteilhaft einen Siedepunkt auf, der bei Systemdruck bei der Kristallisationstemperatur der gelösten und auszukristallisierenden. Verbindung oder darunter liegt. Die mit Wasser nicht mischbare Flüssigkeit kann aber so gewählt werden, daß der Systemdruck im Bereich des Umgebungsdruckes (Normaldruck) oder auch höher liegt. Bevorzugt liegt der Systemdruck im Bereich des Umgebungsdrucks um eine druckfeste Auslegung der Apparaturen, wie sie für höhere Systemdrucke erfoderlich wäre, zu vermeiden. Geeignete mit Wasser nicht mischbare im Bereich des Atmosphärendrucks siedende Flüssigkeiten sind die Frigene 11, 12 und 114, n-Penthan, sowie 2,2-Dimethylpropan.

Vorzugsweise wird diese mit dem Lösungsmittel nicht mischbare Flüssigkeit vor dem Durchströmen der zu kristallisierenden Lösung verdichtet, so daß sie beim Entspannen auf Atmosphärendruck verdampft und der zu kristallisierenden Lösung die zur Verdampfung notwendige Wärme entzieht, wodurch es zur Kristallisation kommt. Vorzugsweise werden die Dämpfe der nicht mischbaren Flüssigkeit anschliessend wieder kondensiert, von weiteren Komponenten wie Anteilen des mit verdampften Lösungsmittels durch reine Dichtetrennung befreit und nach Kondensation wieder zum Auskristallisieren verwendet. Da der Fachmann weiß, bei welcher Temperatur die Kristallisation stattfindet, und welche Temperatursenkung der Lösung daher notwendig ist, ist auf einfache Art und Weise zu berechnen, welche Mengen an nicht mischbarer Lösungsmittel zugesetzt werden müssen, um der zu kühlenden Lösung die notwendige Wärme zu entziehen.

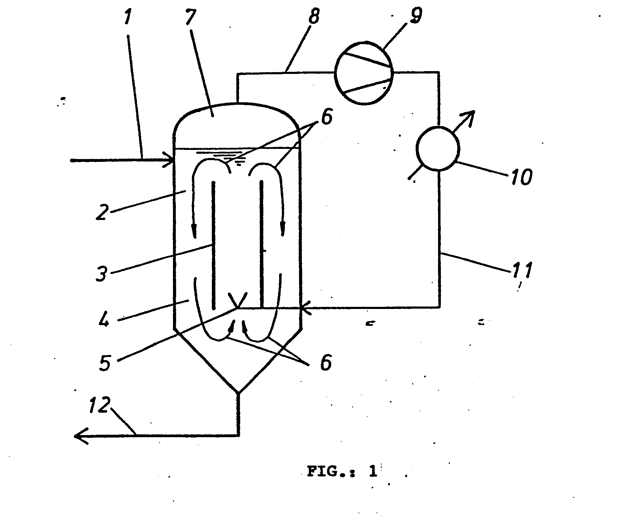

Eine besonders bevorzugte Ausführungsform des erfindungsgemäßen Verfahrens geht aus dem Reaktionschema gemäß Figur 1 hervor.

Die zu kristallisierende Lösung (1) tritt unterhalb des Flüssigkeitsspiegels oben in den zylindrischen Kühlkristallisator (2) ein und strömt in den durch die äussere Begrenzungswand und die zylindrischen Leitvorrichtung (3) gebildeten Ringraum (4) in den unteren Teil des Kühlkristallisators (2). Innerhalb der zylindrischen Leitvorrichtung (3) wird eine mit dem Lösungsmittel nicht mischbare, verdampfbare Flüssigkeit über eine Entspannungsdüse (5) zugeführt. Diese verdampft innerhalb der Leitvorrichtung (3) und steigt in Form von Dampfblasen nach oben. Dadurch wird eine zirkulierende Strömung der Flüssigkeit bewirkt, die innerhalb der Leitvorrichtung (3) aufsteigt und im Ringraum (4) nach unten strömt. Diese zirkulierende Strömung wird durch die Pfeile (6) verdeutlicht. Die Dampfblasen trennen sich an der Flüssigkeitsoberfläche von der Flüssigkeit und sammeln sich im Dampfsammelraum (7). Über die Leitung (8) strömt der Dampf zum Verdichter (9) und wird anschliessend im Kondensator (10) kondensiert. Über die Leitung (11) und die Entspannungsdüse (5) wird das Kondensat wieder in den Kühlkristallisator (2) zurückgeführt.

Über die Leitung (12) wird eine der zuströmenden Menge äquivalente Menge aus dem Kühlkristallisator (2) abgezogen. Diese besteht aus den gebildeten Kristallen und Mutterlauge, die in einer nicht dargestellten Trennvorrichtung voneinander getrennt werden.

Beispiel:

Aus einer wässrigen Lösung von 400 m$^3$/h sind 80 t/h Adipinsäure zu kristallisieren. Die Lösung hat die folgende Zusammensetzung:

| | |
|---|---|
| Adipinsäure | 390 g/l |
| Natronlauge | 60 g/l |
| Schwefeldioxid | 3 g/l |
| Wasser | 797 g/l |

Die Lösung hat eine Temperatur von 60°C. Zur Auskristallisation von 80 t/h Adipinsäure ist eine Temperaturabsenkung auf 30°C erforderlich. Dazu ist für Kühlung und Kristallisation die Abfuhr von 18.600 kWh/h nötig.

Als nicht mischbare Flüssigkeit wird Trichlormonofluormethan gewählt (Frigen 11) mit einem Siedepunkt bei Atmosphärendruck von 24°C und einer Verdampfungswärme von 49 kWh/1000 kg. Die zu verdampfende Menge beträgt 380.000 kg/h und ergibt ein Dämpfevolumen von 58.300 $m^3$/h (i.N.). Entsprechend dem Wasserdampfpartialdruck bei 30°C enthalten die Dämpfe 35 g/$m^3$ (i.N.) Wasserdampf, das entspricht einer Menge von 2.040 kg/h. Die Verdampfungswärme des Wassers bei 30°C beträgt 675 kWh/1.000 kg. Unter Einbeziehung der Wasserverdampfung reduziert sich die zu verdampfende Frigenmenge auf 354.000 kg/h entsprechend einem Dämpfevolumen von 54.300 $m^3$/h (i.N.) ohne Wasserdampf und 56.660 $m^3$/h (i.N.) mit Wasserdampf.

Zur Anhebung der Kondensationstemperatur werden die Dämpfe einstufig auf 2,5 bar verdichtet. Die Kondensationstemperatur liegt dann bei ca. 50°C, so daß die Kondensation mit Kühlwasser oder Umgebungsluft durchgeführt werden kann. Die Kondensationswärme kann auch teilweise zur Wiederaufheizung der Trägerflüssigkeit nach Verlassen des Kühlkristallisators und Entnahme der gebildeten Kristalle eingesetzt werden.

Das Kondensat wird zum Kühlkristallisator zurückgeführt und dort erneut verdampft.

0180796

PATENTANSPRÜCHE

1. Verfahren zur Kristallisation von Verbindungen aus ihren entsprechenden Lösungen durch Kühlung, dadurch gekennzeichnet, daß man der zu kristallisierenden Lösung eine mit dem Lösungmittel nicht mischbare Flüssigkeit zugibt, deren Siedepunkt bei Systemdruck bei der notwendigen Kristallisationstemperatur oder darunter liegt.

2. Verfahren nach Anspruch 1, dadurch gekennzeichnet, daß die mit Wasser nicht mischbare Flüssigkeit so gewählt wird, daß der Systemdruck im Bereich des Umgebungsdruckes oder höher liegt.

3. Verfahren nach Anspruch 1 oder 2, dadurch gekennzeichnet, daß die mit dem Lösungmittel nicht mischbare Flüssigkeit vor dem Durchströmen der zu kristallisierenden Lösung verdichtet wird, so daß sie beim Entspannen auf Atmosphärendruck verdampft und der zu kristallisierenden Lösung, die zur Verdampfung notwendige Wärme entzieht.

4. Verfahren nach einem der Ansprüche 1 bis 3, dadurch gekennzeichnet, daß die Dämpfe der nicht mischbaren Flüssigkeit anschliessend wieder kondensiert, von weiteren Komponenten wie Anteilen des mit verdampften Lösungmittel befreit und nach Kondensation wieder zum Auskristallisieren verwendet werden.

FIG.: 1